# EUROPÄISCHE PATENTSCHRIFT

(11) **EP 4 337 500 B1**
(45) Veröffentlichungstag und Bekanntmachung des Hinweises auf die Patenterteilung: **06.05.2026**
(21) Anmeldenummer: 22744705.9
(22) Anmeldetag: 06.07.2022
(51) Int. Cl.: B60S 1/56, B08B 1/00, B60S 1/34, G02B 27/00

(54) **ANORDNUNG ZUR REINIGUNG EINER KAMERA**
CAMERA CLEANING DEVICE
APPAREIL DE NETTOYAGE DE CAMERA

(30) Priorität: 22.07.2021 DE 102021207874
(43) Veröffentlichungstag der Anmeldung: 20.03.2024
(73) Patentinhaber: Siemens Mobility GmbH, 80997 München (DE)
(72) Erfinder: STOJANOVIC, Vladimir, 1100 Wien (AT)
(74) Vertreter: Siemens Patent Attorneys
(86) Internationale Anmeldenummer: PCT/EP2022/068668
(87) Internationale Veröffentlichungsnummer: WO 2023/001551

(56) Entgegenhaltungen:
- US-B2- 10 576 940
- US-B2- 10 919 502

## Beschreibung

Die Erfindung betrifft eine Anordnung zur Reinigung einer Kamera bzw. einer optisch durchsichtigen Abdeckung einer Kamera.

Es ist bekannt, Kameras an Schienenfahrzeugen für unterschiedlichste Zwecke einzusetzen. Je nach Einsatzzweck weisen diese Kameras unterschiedliche Bauformen mit unterschiedlichen mechanischen Abmessungen bzw. Größen auf.

Für eine zuverlässige Funktionalität einer derartigen Kamera muss diese über ein geeignetes Reinigungssystem verfügen, um Bilder in hoher Qualität auch bei widrigen Witterungsbedingungen (Schnee, Eis, Nebel, Staub, etc.) beim Betrieb des Schienenfahrzeugs anfertigen zu können.

Aus der deutschen Patentanmeldung mit dem Aktenzeichen DE 10 2021 206 827.8 und dem Anmeldetag 30.06.2021 sowie aus der deutschen Patentanmeldung mit dem Aktenzeichen DE 10 2021 204 088.8 und dem Anmeldetag 23.04.2021 sind Kameras bekannt, die mit einer minimalen Größe bzw. Abmessung im Rad-Schiene-Kontaktbereich eines Schienenfahrzeugs angeordnet sind, um dort im Rahmen einer Überwachung eingesetzt zu werden.

Derartige Kameras müssen aufgrund ihrer Positionierung zusätzlichen, mechanischen Belastungen und Beschleunigungen standhalten. Die mechanischen Kräfte, denen eine derartige Kamera im Bereich der Radscheibe bei einem Schienenfahrzeug ausgesetzt ist, sind sehr hoch und direkt proportional zur Masse der Kamera, die wiederum deren Größe beeinflusst.

Diese Kameras sind daher bevorzugt als sogenannte "Minikameras" ausgebildet, die in ihrer Dimensionierung einer Kamera eines Mobiltelefons (das im deutschsprachigen Raum als "Handy" bezeichnet wird) entsprechen.

Als weiteren Vorteil verfügt eine Minikamera über eine sehr kleine, optisch durchsichtige Abdeckung, die im Allgemeinen aus Glas oder aus einem durchsichtigen Kunststoff gefertigt ist. Hinter dieser Abdeckung ist die Kamera bzw. das Kameragehäuse bzw. der optische Bildaufnehmer der Kamera vor Umwelteinflüssen geschützt angeordnet.

Die kleine Fläche der Abdeckung ist für einen Winterbetrieb mit einer Heizung gekoppelt und muss leicht und ohne Schlieren-Bildung zu reinigen sein.

Reinigungsanlagen für Kameras mit geringsten Abmessungen für die oben beschriebenen gewerblichen oder industriellen Anwendungszwecke sind bislang wenig bekannt bzw. gänzlich unbekannt.

In der Automobilindustrie werden Reinigungsanlagen verwendet, um Scheinwerfer zu reinigen. Diese Reinigungsanlagen verfügen über einen Wischermotor, einen Wischerarm mit Wischerblatt, eine Pumpe für ein Reinigungsmittel, einen Schlauch sowie über eine Düse zur Förderung des Reinigungsmittels, etc., um diesen Zweck zu erfüllen.

Aufgrund ihrer mechanischen Ausgestaltung sind derartige Anlagen für die Reinigung von Minikameras zu groß und für die oben beschriebenen räumlich begrenzten Einsatzszenarien nicht geeignet.

Aus Dokument US 10919502 B2 ist ein Rückfahrsystem eines Kraftfahrzeugs bekannt, das einen optischen Bilderfassungssensor und einen Schutzträger aufweist. Der Schutzträger umfasst eine transparente und flache Schutzscheibe. Der optische Sensor ist so auf dem Schutzträger installiert, dass er durch die Schutzscheibe hindurch zeigt. Eine Schaberklinge ist zum Reinigen der Schutzscheibe vorgesehen. Eine elektromagnetische Betätigungsvorrichtung wird zum Betätigen der Schaberklinge in einer Translationsbewegung auf der Schutzscheibe verwendet.

Aus Dokument US 10576940 B2 ist eine Wischvorrichtung zum Reinigen eines optischen Elements bekannt. Ein Wischelement führt in Bezug zu einem Gehäuse eine Bewegung aus, wobei diese Bewegung durch eine Kopplung einer ersten Einheit in oder an dem Wischelement mit einer zweiten Einheit in dem Gehäuse über ein zeitlich veränderliches elektromagnetisches Feld verursacht wird.

Es ist Aufgabe der vorliegenden Erfindung, eine Anordnung zur Reinigung einer Kamera, insbesondere einer Minikamera, anzugeben, die bei geringen Abmessungen eine zuverlässige Reinigungswirkung der optische durchsichtigen Kamera-Abdeckung gewährleistet.

Diese Aufgabe wird durch die Merkmale des unabhängigen Patentanspruchs gelöst. Vorteilhafte Weiterbildungen sind in den abhängigen Patentansprüchen angegeben.

Die Erfindung betrifft eine Anordnung zur Reinigung einer optisch durchsichtigen Abdeckung einer Kamera. Die Kamera ist zum Schutz vor Umwelteinflüssen unter der optisch durchsichtigen Abdeckung angeordnet. Ein Wischerblatt ist zur Reinigung der Abdeckung über die Abdeckung führbar. Das Wischerblatt ist mit einem gelagerten Gestänge verbunden, mit dem das Wischerblatt zwischen einer ersten Position und einer zweiten Position über der Abdeckung bewegbar ist. Das Gestänge ist mit einem elektromagnetischen Antrieb gekoppelt.

Der elektromagnetische Antrieb weist ein Antriebselement auf, das mit dem Gestänge derart verbunden ist, dass das Antriebselement das Gestänge linear bewegt. Das aufbauende Magnetfeld der Spule ist derart mit dem Antriebselement gekoppelt, dass aufgrund der Kopplung eine auf das Antriebselement wirkende Kraft gebildet wird, die über das Gestänge auf das Wischerblatt übertragen wird, um das Wischerblatt in einer Linearbewegung von der ersten Position in die zweite Position zu bringen.

In einer nicht mehr beanspruchten Weiterbildung ist das Wischerblatt über einen beweglich gelagerten Rahmen mit dem Gestänge verbunden, so dass über das Gestänge die Bewegung des Rahmens und damit die Positionsänderung des Wischerblatts erfolgt.

In einer nicht mehr beanspruchten Weiterbildung ist das Antriebselement des elektromagnetischen Antriebs an einem Ende über eine Feder mit einem Festpunkt derart verbunden, dass die Feder beim Aufbau der Kraft, die als Schubkraft wirkt, gespannt wird und eine Rückstellkraft bildet. Durch die Rückstellkraft wird beim Abbau oder Fehlen der Schubkraft das Wischerblatt von der zweiten Position in die erste Position gebracht.

Erfindungsgemäß ist das Gestänge mit einem weiteren elektromagnetischen Antrieb gekoppelt. Dieser elektromagnetische Antrieb weist ebenfalls eine stromdurchflossene Spule auf, die über einen zugeführten Strom ein Magnetfeld aufbaut. Der elektromagnetische Antrieb weist ein Antriebselement aufweist, das mit dem Gestänge derart verbunden ist, dass das Antriebselement das Gestänge linear bewegt. Das aufbauende Magnetfeld der Spule ist derart mit dem Antriebselement gekoppelt, dass aufgrund der Kopplung eine auf das Antriebselement wirkende Kraft gebildet wird, die über das Gestänge auf das Wischerblatt übertragen wird, um das Wischerblatt in einer Linearbewegung von der zweiten Position in die erste Position zu bringen.

In einer bevorzugten Weiterbildung ist das Wischerblatt und/oder die Abdeckung zur Verbesserung der Reinigungswirkung mit einem flüssigen Reinigungsmittel beaufschlagt.

In einer bevorzugten Weiterbildung ist in der Nähe der Kamera eine Beleuchtung vorgesehen, die unter einer Abdeckung angeordnet ist. Diese Abdeckung ist dabei bevorzugt derart positioniert, dass deren Oberseite ebenfalls durch die Bewegung des Wischerblatts gereinigt wird.

In einer bevorzugten Weiterbildung wird als Kamera eine Minikamera verwendet, wobei die Minikamera in ihrer Dimensionierung einer Kamera eines Mobiltelefons (also eines "Handy" im deutschsprachigen Raum bzw. eines "Mobile") entspricht.

In einer bevorzugten Weiterbildung ist die Reinigungsanordnung mit der (Mini-) Kamera an einem Schienenfahrzeug in einem Rad-Schiene-Bereich für optische Überwachungsaufgaben angeordnet. In diesem Bereich berührt ein Rad des Schienenfahrzeugs die zu befahrende Schiene bzw. ein zu befahrendes Gleis.

In einer bevorzugten Weiterbildung ist die optisch durchsichtige Abdeckung
- eine Abdeckung eines Bildaufnehmers einer Kamera,
- eine Abdeckung eines Bildsensors (vgl. CCD-Chip) einer Kamera,
- eine Linse eines Kameraobjektivs, oder
- ein Teil eines schützenden Gehäuses, in dem eine betriebsfähige Kamera zum Schutz vor Umwelteinflüssen angeordnet ist.

In einer bevorzugten Weiterbildung ist das Antriebselement ein Magnet, der im Inneren der Spule angeordnet ist und mi dieser magnetisch gekoppelt ist.

Der Magnet ist dabei bevorzugt ein stabförmiger Permanentmagnet, durch eine Realisierung der Erfindung bei einem minimalen Volumen ermöglicht.

Alternativ dazu kommt als Antriebselement ein ferromagnetisches, stabförmiges Element zum Einsatz, das von einer stromdurchflossenen Spule umgeben ist, um einen Magneten auszubilden.

In einer weiteren Alternative ist das Antriebselement ein ferromagnetisches Material, während die Spule Teil eines ferromagnetischen Kerns ist. Der Kern ist beispielswiese als U-Bügel ausgebildet. Die stromdurchflossene Spule bildet in Verbindung mit dem Kern ein Magnetfeld aus, das durch die erfolgende magnetische Kopplung das ferromagnetische Antriebselement in Richtung des Kerns bewegt.

Die vorliegende Erfindung erfüllt die für Schienenfahrtzeuge geforderten mechanischen Vorgaben, die beispielsweise in der

Deutschen Industrienorm DIN EN 61373, "Eisenbahnanwendungen - Fahrzeugeinrichtungen, Vibrations- und Stoßprüfungen" gegeben sind. In dieser Norm werden für Geräte, die im Bereich der Fahrwerke montiert sind, vorbestimmte Kräfte bzw. Beschleunigungen definiert, denen diese Geräte standhalten müssen.

Die vorliegende Erfindung basiert auf einem elektromagnetischen Direkt-Antrieb. Dieser verwendet ein magnetisches Feld zur Bildung einer Kraft, die auf ein Antriebselement wirkt und dieses linear bewegt. Das Antriebselement wirkt wiederum direkt auf eine zu bewegende Last (hier Gestänge bzw. Rahmen, Wischerblatt), die ebenfalls linear bewegt wird.

Das Volumen der erfindungsgemäßen Anordnung ist deutlich geringer als das Volumen einer Reinigungsanlage gemäß dem in der Einleitung genannten Stand der Technik.

Die erfindungsgemäße Anordnung ist zuverlässig im Betrieb und ist gegenüber Störungen sehr robust bzw. nicht anfällig.

Die erfindungsgemäße Anordnung weist eine einfache und damit zuverlässige, kostengünstige Konstruktion auf.

Die erfindungsgemäße Anordnung ist bezüglich des benötigten Eigengewichts reduziert, ist einfach in der Wartung realisiert und verfügt über eine kompakte Bauweise.

Die erfindungsgemäße Anordnung ist gegenüber Erschütterungen resistent.

Nachfolgend wird die Erfindung beispielhaft anhand einer Zeichnung näher erläutert. Dabei zeigt:
- FIG 1: eine nicht mehr beanspruchte erste Anordnung,
- FIG 2: mit teilweisem Bezug auf FIG 1 eine zweite und erfindungsgemäße Anordnung, und
- FIG 3: eine beispielhafte Anordnung der Komponenten der Erfindung an einem Schienenfahrzeug.

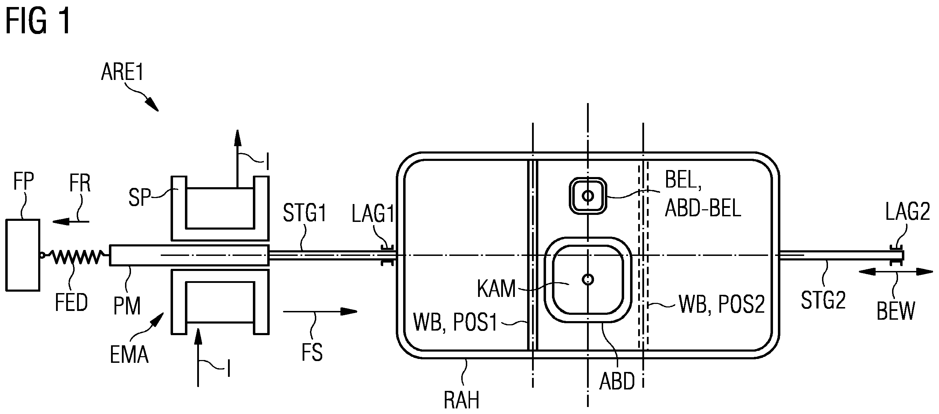

FIG 1 zeigt eine nicht mehr beanspruchte erste Anordnung ARE1.

Eine Kamera KAM, die bevorzugt als Minikamera ausgebildet ist, ist zum Schutz vor Umwelteinflüssen unter einer Abdeckung ABD angeordnet.

Diese Abdeckung ABD wird mit Hilfe eines Wischerblatts WB, das über die Abdeckung ABD geführt ist, gereinigt.

Das Wischerblatt WB und/oder die Abdeckung ABD wird zu diesem Zweck mit einem flüssigen Reinigungsmittel (beispielsweise mit einer Wasser-Reinigungsmittel-Lösung) beaufschlagt.

Zur Reinigung wird das Wischerblatt WB linear zwischen einer ersten Position POS1 und einer zweiten Position POS2 über die Abdeckung ABD geführt.

Die Reinigung der Abdeckung ABD und damit der Kamera KAM bzw. der Kameraoptik erfolgt über die wechselweise erfolgende Bewegung BEW des Wischerblatts WB zwischen den beiden Positionen POS1 und POS2.

Das Wischerblatt WB ist zu diesem Zweck an einem beweglich gelagerten Rahmen RAH befestigt. Durch eine Linearbewegung des Rahmens RAH wird die Bewegung des Wischerblatts WB zwischen den beiden Positionen POS1 und POS2 realisiert.

Zur Durchführung der Linearbewegung des Rahmens RAH ist dieser beweglich geführt.

Hier erfolgt dies über ein mit dem Rahmen RAH verbundenes, gelagertes Gestänge, das nachfolgend beschrieben wird.

Der Rahmen RAH ist an einer ersten Seite mit einer ersten Stange STG1 verbunden, die über ein erstes Lager LAG1 geführt ist.

Der Rahmen RAH ist an einer zweiten Seite mit einer zweiten Stange STG2 verbunden, die über ein zweites Lager LAG2 geführt ist.

Mit Hilfe der beiden Stangen STG1, STG2 und der beiden Lager LAG1, LAG2 wird die Linearbewegung des Rahmens RAH ermöglicht.

Die erste Stange STG1 ist mit einem elektromagnetischen Antrieb EMA gekoppelt, der, wie nachfolgend beschrieben, als Direktantrieb ausgebildet ist.

Unter dem Begriff "Direktantrieb" wird ein elektromagnetischer Antrieb verstanden, bei dem durch angewendete Magnetfelder eine lineare Antriebsbewegung gebildet wird. Elektromagnetische Antriebe werden in Schaltschützen, Relais und ähnlichen Geräten verwendet.

Der elektromagnetische Antrieb EMA weist beispielhaft eine Spule SP auf, durch die ein elektrischer Strom I geleitet wird, um ein Magnetfeld der Spule SP auszubilden.

Im Inneren der Spule und damit im Inneren des zugehörigen Magnetfelds ist ein in Richtung der Längsbewegung BEW beweglich gelagerter, stabförmiger Magnet PM, der hier als Permanentmagnet ausgebildet ist, angeordnet.

Der Magnet PM ist mit seinem ersten Ende mit der ersten Stange STG1 verbunden bzw. gekoppelt. Er ist mit seinem zweiten Ende, das dem ersten Ende gegenüberliegt, über eine Feder FED mit einem Festpunkt FP verbunden.

Wird durch die Spule SP der elektrischer Strom I geleitet, bildet sich das Magnetfeld der Spule SP aus. Über eine magnetische Wechselwirkung mit dem Magneten PM wird eine Schubkraft FS gebildet, die über die erste Stange STG1 auf den Rahmen RAH und damit auf das Wischerblatt WB wirkt. In Folge wird die Linearbewegung des Wischerblatts WB ausgelöst, das von der ersten Position POS1 zur zweiten Position POS2 gebracht wird.

Durch die Schubkraft FS wird über die Bewegung des Magneten PM die Feder FED gespannt bzw. gedehnt, so dass eine Rückstellkraft FR gebildet wird.

Wird der Durchfluss des elektrischen Stroms I in der Spule SP beendet, wird durch das fehlende Magnetfeld der Spule SP die Wechselwirkung mit dem Magneten PM beendet, entsprechend erlischt die Schubkraft FS.

Über die gespannte Feder FED wirkt dann die Rückstellkraft FR auf die Stangen STG1, STG2, auf den Rahmen RAH und damit auf das Wischerblatt WB. Das Wischerblatt WB wird durch die Rückstellkraft FR von der zweiten Position POS2 in die erste Position POS1 bewegt bzw. gebracht.

Durch diese Bewegung wird die Feder FED entspannt und die Rückstellkraft FR erlischt.

Ein erster Reinigungszyklus ist abgeschlossen.

Bei einem erneuten Einleiten des elektrischen Stroms I in die Spule SP wird entsprechend dem oben beschriebenen Ablauf ein zweiter Reinigungszyklus gestartet.

Um die Aufnahmesituation der Kamera KAM zu verbessern, ist in der Nähe der Kamera KAM eine Beleuchtung BEL vorgesehen. Die Beleuchtung BEL ist ebenfalls unter einer Abdeckung ABD-BEL angeordnet. Diese Abdeckung ABD-BEL ist derart positioniert, dass deren Oberseite durch die Bewegung des Wischerblatts WB ebenfalls gereinigt wird.

Die beiden Abdeckungen ABD-BEL und ABD sind bevorzugt zu einer gemeinsamen bzw. durchgängigen Abdeckung zusammengefasst.

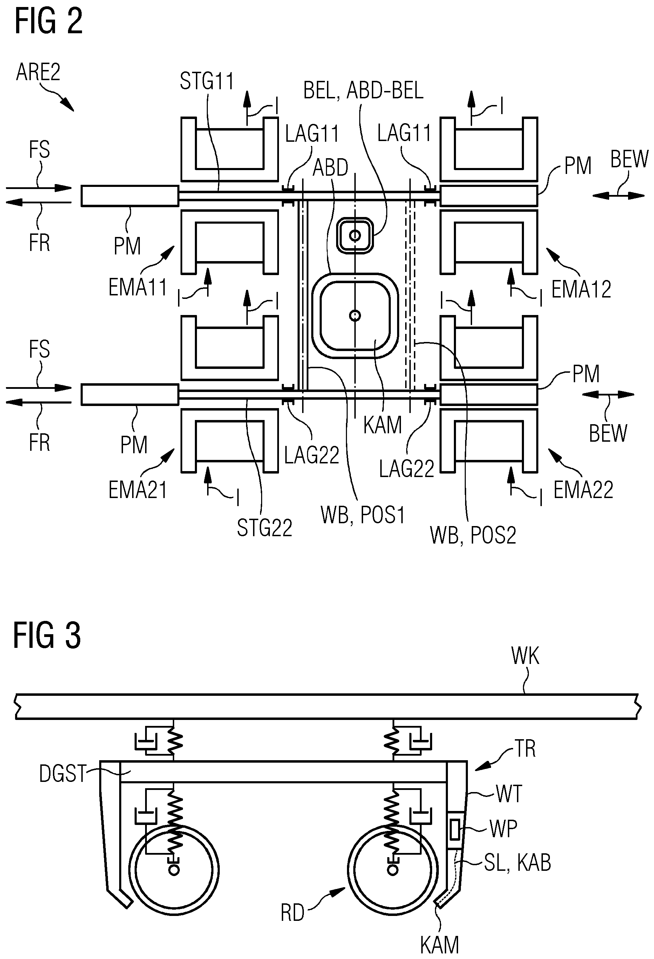

FIG 2 zeigt mit teilweisem Bezug auf Elemente der FIG 1 eine zweite und erfindungsgemäße Anordnung ARE2.

Die Kamera KAM, die bevorzugt als Minikamera ausgebildet ist, ist zum Schutz vor Umwelteinflüssen wieder unter der Abdeckung ABD angeordnet.

Diese Abdeckung ABD wird mit Hilfe des Wischerblatts WB, das über die Abdeckung ABD geführt ist, in einer geführten Linearbewegung gereinigt.

Das Wischerblatt WB und/oder die Abdeckung ABD wird mit einem flüssigen Reinigungsmittel (beispielsweise mit einer Wasser-Reinigungsmittel-Lösung) beaufschlagt.

Zur Reinigung wird das Wischerblatt WB linear zwischen einer ersten Position POS1 und einer zweiten Position POS2 über die Abdeckung ABD geführt.

Die Reinigung der Abdeckung ABD und damit der Kamera KAM bzw. der zugehörigen Kameraoptik erfolgt über die wechselweise erfolgende, lineare Bewegung BEW des Wischerblatts WB zwischen den beiden Positionen POS1 und POS2.

Das Wischerblatt WB ist zu diesem Zweck an einem ersten Ende mit einer ersten Stange STG11 verbunden, die über Lager LAG11 geführt ist.

Das Wischerblatt WB ist zusätzlich an einem zweiten Ende, das dem ersten Ende gegenüberliegt, mit einer zweiten Stange STG22 verbunden, die über Lager LAG22 geführt ist.

Über die beiden Stangen STG11, STG22 und über die Lager LAG11, LAG22 wird die Linearbewegung des Wischerblatt WB ermöglicht bzw. realisiert.

Die erste Stange STG11 ist mit einem ersten Ende mit einem ersten elektromagnetischen Antrieb EMA11 gekoppelt, der wieder als Direktantrieb ausgebildet ist.

Die zweite Stange STG22 ist mit einem ersten Ende mit einem zweiten elektromagnetischen Antrieb EMA21 gekoppelt, der ebenfalls als Direktantrieb ausgebildet ist.

Zur Funktionalität der beiden elektromagnetischen Antriebe EMA11, EMA21 wird auf die Ausführungen zur FIG 1 verwiesen.

Wird durch die Spule des ersten Antriebs EMA11 der elektrische Strom I geleitet, bildet sich ein Magnetfeld der Spule aus. Über die zugehörige magnetische Wechselwirkung mit dem Magneten PM wird eine Schubkraft FS gebildet, die über die erste Stange STG11 auf das Wischerblatt WB wirkt. Dadurch wird eine Linearbewegung des Wischerblatts WB von der ersten Position POS1 zur zweiten Position POS2 ausgelöst bzw. durchgeführt.

Gleiches gilt für die Spule des zweiten Antriebs EMA21. Wird durch diese der elektrische Strom I geleitet, bildet sich ein Magnetfeld der Spule aus. Über die zugehörige magnetische Wechselwirkung mit dem Magneten PM wird eine Schubkraft FS gebildet, die über die zweite Stange STG22 auf das Wischerblatt WB wirkt. Dadurch wird die Linearbewegung des Wischerblatts WB von der ersten Position POS1 zur zweiten Position POS2 ausgelöst bzw. durchgeführt.

Wird nachfolgend der Durchfluss des elektrischen Stroms I in den Spulen der beiden Antriebe EMA11, EMA21 beendet, erlischt durch das fehlende Magnetfeld der Spule die Wechselwirkung mit den Permanentmagneten PM und die Schubkraft FS endet. Die beiden elektromagnetischen Antriebe EMA11, EMA21 sind jetzt funktionslos.

Die Rückstellung bzw. Rückführung des Wischerblatts WB von der zweiten Position POS2 zur ersten Position POS1 erfolgt durch die beiden elektromagnetischen Antriebe EMA12, EMA22.

Für die Rückstellung ist die erste Stange STG11 mit einem zweiten Ende mit einem dritten elektromagnetischen Antrieb EMA12 gekoppelt, der wieder als Direktantrieb ausgebildet ist.

Die zweite Stange STG22 ist mit einem zweiten Ende mit einem vierten elektromagnetischen Antrieb EMA22 gekoppelt, der ebenfalls als Direktantrieb ausgebildet ist.

Zur Funktionalität der beiden elektromagnetischen Antriebe EMA12, EMA22 wird auf die Ausführungen zur FIG 1 verwiesen.

Wird durch die Spule des dritten Antriebs EMA12 der elektrische Strom I geleitet, bildet sich ein Magnetfeld der Spule aus. Über die zugehörige magnetische Wechselwirkung mit dem Magneten PM wird eine Rückstellkraft FR gebildet, die über die erste Stange STG11 auf das Wischerblatt WB wirkt. Dadurch wird eine Linearbewegung des Wischerblatts WB von der zweiten Position POS2 zur ersten Position POS1 ausgelöst bzw. durchgeführt.

Gleiches gilt für die Spule des vierten Antriebs EMA22. Wird durch diese der elektrische Strom I geleitet, bildet sich ein Magnetfeld der Spule aus. Über die zugehörige magnetische Wechselwirkung mit dem Magneten PM wird eine Rückstellkraft FR gebildet, die über die zweite Stange STG22 auf das Wischerblatt WB wirkt. Dadurch wird die Linearbewegung des Wischerblatts WB von der zweiten Position POS2 zur ersten Position POS1 ausgelöst bzw. durchgeführt.

Wird nachfolgend der Durchfluss des elektrischen Stroms I in den Spulen der beiden Antriebe EMA12, EMA22 beendet, erlischt durch das fehlende Magnetfeld der Spule die Wechselwirkung mit den Permanentmagneten PM und die Rückstellkraft FR endet. Die beiden elektromagnetischen Antriebe EMA12, EMA22 sind jetzt funktionslos.

Damit ist ein erster Reinigungszyklus abgeschlossen.

Bei einem erneuten Einleiten von elektrische Strom I in die Spulen der beiden elektromagnetischen Antriebe EMA11, EMA21 wird entsprechend dem oben beschriebenen Ablauf ein zweiter Reinigungszyklus gestartet.

Mit Bezug auf die beiden Figuren FIG 1 und FIG 2 sind folgende, nicht näher dargestellte Mischformen denkbar:
- Mit Bezug auf FIG 1 ist das Wischerblatt direkt mit den Stangen STG1, STG2 des Gestänges verbunden, der Rahmen RAH entfällt.
- Mit Bezug auf FIG 1 erfolgt der Aufbau der Rückstellkraft FR mit Hilfe eines zum Antrieb EMA 12 vergleichbaren Antriebs, der mit der zweiten Stange STG2 verbunden ist. Die Feder FED entfällt entsprechend.
- Mit Bezug auf FIG 2 ist das Wischerblatt über einen Rahmen mit einer der Stangen, also entweder STG11 oder STG22, verbunden. Die andere Stange sowie die Antriebe EMA 21 und EMA 22 könnten dann entfallen, entsprechend der in FIG 1 beschriebenen Funktionalität.
- Mit Bezug auf FIG 2 erfolgt der Aufbau der Rückstellkraft FR mit Hilfe einer Feder, entsprechend der in FIG 1 beschriebenen Funktionalität.

FIG 3 zeigt eine beispielhafte Anordnung von Komponenten der Erfindung an einem Schienenfahrzeug.

Vom Schienenfahrzeug ist ein Wagenkasten WK mit einem Drehgestell DGST, an dem ein RAD befestigt ist, gezeigt.

Die in den Figuren FIG 1 oder FIG 2 beschriebene Anordnung ist im Rad-Schiene-Bereich des Schienenfahrzeugs angeordnet.

Die in den Figuren FIG 1 oder FIG 2 beschriebene Anordnung ist dazu an einem Träger TR des Drehgestells befestigt.

Im Träger integriert bzw. an diesem befestigt ist ein Wischwasser-Tank WT, eine Wischwasser-Pumpe WP, ein Wischwasser-Schlauch SL sowie elektrische Kabel KAB angeordnet, um die Kamera KAM sowie die zugehörige Reinigung funktionell anzusteuern bzw. zu bedienen.

Kamera und Reinigung werden beispielsweise mit Hilfe einer Software angesteuert bzw. betrieben.

Die Software erkennt, sobald die Abdeckung der Kamera verschmutzt ist und leitet die oben beschriebene Reinigung ein.

Es ist vorteilhaft, die Reinigung bei einem Aufenthalt des Schienenfahrzeugs an einem Bahnhof oder beim operativen Stillstand des Schienenfahrzeugs auf freier Strecke vorzunehmen.

Die Software ist bevorzugt derart ausgebildet, dass sie einen Ausfall von Komponenten der Reinigung erkennt und ein für den Triebfahrzeugführer bestimmtes (Alarm-) Signal auslöst, z.B.
- wenn keine Wischerblatt-Bewegung erfolgt, weil das Wischerblatt im Bewegungsablauf verklemmt oder blockiert ist,
- wenn das verwendete flüssige Reinigungsmittel ungleichmäßig aufgesprüht bzw. dem Reinigungssystem zugeführt wird,
- wenn an einer Reinigungsmitteldüse ein unzureichender Druck vorherrscht,
- wenn eine Fehlfunktion eines Wischerschalters bzw. eines Wahlschalters für eine geforderte Betriebsart vorliegt,
- etc.

## Patentansprüche

1. Anordnung zur Reinigung einer optisch durchsichtigen Abdeckung (ABD) einer Kamera (KAM),
- bei der die Kamera (KAM) zum Schutz vor Umwelteinflüssen unter der optisch durchsichtigen Abdeckung (ABD) angeordnet ist,
- bei der ein Wischerblatt (WB) zur Reinigung der Abdeckung (ABD) über die Abdeckung (ABD) geführt ist,
- bei der das Wischerblatt (WB) mit einem gelagerten Gestänge (STG11, STG22) verbunden ist, mit dem das Wischerblatt (WB) zwischen einer ersten Position (POS1) und einer zweiten Position (POS2) über der Abdeckung (ABD) bewegbar ist,
- bei der das Gestänge (STG11, STG22) mit einem elektromagnetischen Antrieb (EMA11, EMA21) gekoppelt ist,
- bei der der elektromagnetische Antrieb (EMA11, EMA21) eine stromdurchflossene Spule (SP) aufweist, die über einen zugeführten Strom (I) ein Magnetfeld aufbaut,
- bei der der elektromagnetische Antrieb (EMA11, EMA21) ein Antriebselement (PM) aufweist, das mit dem Gestänge (STG11, STG22) derart verbunden ist, dass das Antriebselement (PM) das Gestänge (STG11, STG22) linear bewegt,
- bei der das aufbauende Magnetfeld der Spule (SP) derart mit dem Antriebselement (PM) gekoppelt ist, dass aufgrund der Kopplung eine auf das Antriebselement (PM) wirkende Kraft (FS) gebildet wird, die über das Gestänge (STG11, STG22) auf das Wischerblatt (WB) übertragen wird, um das Wischerblatt (WB) in einer Linearbewegung von der ersten Position (POS1) in die zweite Position (POS2) zu bringen,
**dadurch gekennzeichnet,**
- **dass** das Gestänge (STG11, STG22) mit einem weiteren elektromagnetischen Antrieb (EMA12, EMA22) gekoppelt ist,
- bei der der weitere elektromagnetische Antrieb (EMA12, EMA22) eine stromdurchflossene Spule (SP) aufweist, die über einen zugeführten Strom (I) ein Magnetfeld aufbaut,
- bei der der weitere elektromagnetische Antrieb (EMA12, EMA22) ein Antriebselement (PM) aufweist, das mit dem Gestänge (STG11, STG22) derart verbunden ist, dass das Antriebselement (PM) das Gestänge (STG11, STG22) linear bewegt,
- bei der das aufbauende Magnetfeld der Spule (SP) des weiteren elektromagnetischen Antriebs (EMA12, EMA22) derart mit dem Antriebselement (PM) gekoppelt ist, dass aufgrund der Kopplung eine auf das Antriebselement (PM) wirkende Kraft (FR) gebildet wird, die über das Gestänge (STG11, STG22) auf das Wischerblatt (WB) übertragen wird, um das Wischerblatt (WB) in einer Linearbewegung von der zweiten Position (POS2) in die erste Position (POS1) zu bringen.

2. Anordnung nach Anspruch 1, bei der das Wischerblatt (WB) und/oder die Abdeckung (ABD) zur Verbesserung der Reinigungswirkung mit einem flüssigen Reinigungsmittel beaufschlagt ist.

3. Anordnung nach einem der vorhergehenden Ansprüche,
- bei der in der Nähe der Kamera (KAM) eine Beleuchtung (BEL) vorgesehen ist, die unter einer Abdeckung (ABD-BEL) angeordnet ist,
- bei der diese Abdeckung (ABD-BEL) derart positioniert ist, dass deren Oberseite ebenfalls durch die Bewegung des Wischerblatts (WB) gereinigt wird.

4. Anordnung nach einem der vorhergehenden Ansprüche, bei der das Antriebselement (PM) ein Magnet, bevorzugt ein Permanentmagnet, ist, der im Inneren der Spule (SP) angeordnet ist.

5. Anordnung nach einem der vorhergehenden Ansprüche,
- bei der das Antriebselement ein ferromagnetisches Material, bevorzugt Eisen, ist,
- bei der die Spule (SP) Teil eines ferromagnetischen Kerns ist, der eine magnetische Kopplung des Antriebselements mit dem Magnetfeld der Spule (SP) realisiert.

## Claims

1. Assembly for cleaning an optically translucent cover (ABD) of a camera (KAM),
- in which the camera (KAM) is arranged under the optically translucent cover (ABD) so as to be protected from environmental influences,
- in which a wiper blade (WB) is guided over the cover (ABD) for cleaning the cover (ABD),
- in which the wiper blade (WB) is connected to a mounted linkage (STG11, STG22), with which the wiper blade (WB) can be moved over the cover (ABD) between a first position (POS1) and a second position (POS2),
- in which the linkage (STG11, STG22) is coupled to an electromagnetic drive (EMA11, EMA21),
- in which the electromagnetic drive (EMA11, EMA21) has a coil (SP) through which current flows and which uses a supplied current (I) to build up a magnetic field,
- in which the electromagnetic drive (EMA11, EMA21) has a drive element (PM), which is connected to the linkage (STG11, STG22) in such a way that the drive element (PM) moves the linkage (STG11, STG22) linearly,
- in which the magnetic field of the coil (SP) that is building up is coupled to the drive element (PM) in such a way that a force (FS) acting on the drive element (PM) is formed on the basis of the coupling and is transmitted to the wiper blade (WB) by way of the linkage (STG11, STG22) in order to bring the wiper blade (WB) from the first position (POS1) into the second position (POS2) in a linear movement,
**characterized**
- **in that** the linkage (STG11, STG22) is coupled to a further electromagnetic drive (EMA12, EMA22),
- **in that** the further electromagnetic drive (EMA12, EMA22) has a coil (SP) through which current flows and which uses a supplied current (I) to build up a magnetic field,
- **in that** the further electromagnetic drive (EMA12, EMA22) has a drive element (PM), which is connected to the linkage (STG11, STG22) in such a way that the drive element (PM) moves the linkage (STG11, STG22) linearly,
- **in that** the magnetic field of the coil (SP) of the further electromagnetic drive (EMA12, EMA22) that is building up is coupled to the drive element (PM) in such a way that a force (FR) acting on the drive element (PM) is formed on the basis of the coupling and is transmitted to the wiper blade (WB) by way of the linkage (STG11, STG22) in order to bring the wiper blade (WB) from the second position (POS2) into the first position (POS1) in a linear movement.

2. Assembly according to Claim 1, in which a liquid cleaning agent is applied to the wiper blade (WB) and/or the cover (ABD) to improve the cleaning effect.

3. Assembly according to one of the preceding claims,
- in which lighting (BEL) which is arranged under a cover (ABD-BEL) is provided in the vicinity of the camera (KAM),
- in which this cover (ABD-BEL) is positioned in such a way that its upper side is likewise cleaned by the movement of the wiper blade (WB).

4. Assembly according to one of the preceding claims, in which the drive element (PM) is a magnet, preferably a permanent magnet, which is arranged inside the coil (SP).

5. Assembly according to one of the preceding claims,
- in which the drive element is a ferromagnetic material, preferably iron,
- in which the coil (SP) is part of a ferromagnetic core which implements a magnetic coupling of the drive element to the magnetic field of the coil (SP).

## Revendications

1. Dispositif de nettoyage d'un couvercle optiquement translucide (ABD) d'une caméra (KAM),
- dans lequel la caméra (KAM) est disposée sous le couvercle optiquement translucide (ABD) afin d'être protégée des influences environnementales,
- dans lequel un balai d'essuie-glace (WB) destiné au nettoyage du couvercle (ABD) est guidé sur le couvercle (ABD),
- dans lequel le balai d'essuie-glace (WB) est relié à une tige logée (STG11, STG22) avec laquelle le balai d'essuie-glace (WB) est mobile sur le couvercle (ABD) entre une première position (POS1) et une deuxième position (POS2),
- dans lequel la tige (STG11, STG22) est couplée à un entraînement électromagnétique (EMA11, EMA21),
- dans lequel l'entraînement électromagnétique (EMA11, EMA21) présente une bobine (SP) parcourue par un courant qui crée un champ magnétique au moyen d'un courant fourni (I),
- dans lequel l'entraînement électromagnétique (EMA11, EMA21) présente un élément d'entraînement (PM), qui est relié à la tige (STG11, STG22) d'une manière telle que l'élément d'entraînement (PM) déplace la tige (STG11, STG22) linéairement,
- dans lequel le champ magnétique en création de la bobine (SP) est couplé à l'élément d'entraînement (PM) d'une manière telle que, en raison du couplage, une force (FS) agissant sur l'élément d'entraînement (PM) est formée, qui est transmise au balai d'essuie-glace (WB) par la tige (STG11, STG22), pour mettre le balai d'essuie-glace (WB) dans un mouvement linéaire de la première position (POS1) à la deuxième position (POS2),
**caractérisé en ce**
- **que** la tige (STG11, STG22) est couplée à un autre entraînement électromagnétique (EMA12, EMA22),
- dans lequel l'autre entraînement électromagnétique (EMA12, EMA22) présente une bobine parcourue par un courant qui crée un champ magnétique au moyen d'un courant fourni (I),
- dans lequel l'autre entraînement électromagnétique (EMA12, EMA22) présente un élément d'entraînement (PM), qui est relié à la tige (STG11, STG22) d'une manière telle que l'élément d'entraînement (PM) déplace la tige (STG11, STG22) linéairement,
- dans lequel le champ magnétique en création de la bobine (SP) de l'autre entraînement électromagnétique (EMA12, EMA22) est couplé à l'élément d'entraînement (PM) d'une manière telle que, en raison du couplage, une force (FR) agissant sur l'élément d'entraînement (PM) est formée, qui est transmise par la tige (STG11, STG22) au balai d'essuie-glace (WB), pour mettre le balai d'essuie-glace (WB) dans un mouvement linéaire de la deuxième position (POS2) à la première position (POS1).

2. Dispositif selon la revendication 1, dans lequel un produit de nettoyage liquide est appliqué au balai d'essuie-glace (WB) et/ou au couvercle (ABD) pour améliorer l'effet nettoyant.

3. Dispositif selon l'une des revendications précédentes,
- dans lequel est prévu, à proximité de la caméra (KAM), un éclairage (BEL) qui est disposé sous un couvercle (ABD-BEL)
- dans lequel ce couvercle (ABD-BEL) est positionné d'une manière telle que son côté supérieur est également nettoyé par le mouvement du balai d'essuie-glace (WB).

4. Dispositif selon l'une des revendications précédentes, dans lequel l'élément d'entraînement (PM) est un aimant, de préférence un aimant permanent, qui est disposé à l'intérieur de la bobine (SP).

5. Dispositif selon l'une des revendications précédentes,
- dans lequel l'élément d'entraînement est un matériau ferromagnétique, de préférence du fer,
- dans lequel la bobine (SP) fait partie d'un noyau ferromagnétique qui réalise un couplage magnétique de l'élément d'entraînement avec le champ magnétique de la bobine (SP).
